# EUROPÄISCHE PATENTSCHRIFT

(11) **EP 3 366 907 B1**
(45) Veröffentlichungstag und Bekanntmachung des Hinweises auf die Patenterteilung: **13.05.2020**
(21) Anmeldenummer: 18158530.8
(22) Anmeldetag: 26.02.2018
(51) Int. Cl.: F02K 1/08, F02K 3/06

(54) **KONVERGENT-DIVERGENTE SCHUBDÜSE FÜR EIN TURBOFAN-TRIEBWERK EINES ÜBERSCHALLFLUGZEUGS UND VERFAHREN ZUR EINSTELLUNG DER DÜSENHALSFLÄCHE IN EINER SCHUBDÜSE EINES TURBOFAN-TRIEBWERKS**
CONVERGENT-DIVERGENT NOZZLE FOR A TURBOFAN ENGINE OF A SUPERSONIC AIRCRAFT AND METHOD FOR ADJUSTING THE NOZZLE THROAT SURFACE IN A NOZZLE OF A TURBOFAN ENGINE
TUYÈRE D'ÉJECTION CONVERGENTE-DIVERGENTE POUR UN TURBORÉACTEUR À DOUBLE FLUX D'UN AVION SUPERSONIQUE ET PROCÉDÉ DE RÉGLAGE DE LA SURFACE D'ÉTRANGLEMENT DE LA TUYÈRE DANS UNE TUYÈRE D'ÉJECTION D'UN TURBORÉACTEUR À DOUBLE FLUX

(30) Priorität: 27.02.2017 DE 102017104036
(43) Veröffentlichungstag der Anmeldung: 29.08.2018
(73) Patentinhaber: Rolls-Royce Deutschland Ltd & Co KG, 15827 Blankenfelde-Mahlow (DE)
(72) Erfinder: TODOROVIC, Predrag, 15827 Blankenfelde-Mahlow (DE)
(74) Vertreter: Müller, Wolfram Hubertus

(56) Entgegenhaltungen:
- EP-A2- 2 472 089
- WO-A2-2015/026417
- US-A- 3 598 318
- US-A1- 2012 128 467

## Beschreibung

Die Erfindung betrifft eine konvergent-divergente Schubdüse für ein Turbofan-Triebwerk eines Überschallflugzeugs gemäß dem Oberbegriff des Patentanspruchs 1 und ein Verfahren zur Einstellung der Düsenhalsfläche in einer Schubdüse eines Turbofan-Triebwerks.

Es ist allgemein anzustreben, bei einer konvergent-divergenten Schubdüse, die eine Düsenhalsfläche (üblicherweise als A8 bezeichnet) und eine Düsenaustrittsfläche (üblicherweise als A9 bezeichnet) aufweist, den Expansionsgrad des Strömungskanals hinter der Düsenhalsfläche, also das Verhältnis von A9 zu A8 für verschiedene Betriebszustände in gewünschter Weise einstellen zu können.

Hierzu ist es bekannt, eine Schubdüse mit variabler Kontur auszubilden, beispielsweise als Iris/Petal-Düse mit einer Vielzahl einzelner verstellbarer Lamellen. So ist es bekannt, bei einer Schubdüse eine Gruppe konvergenter Lamellen und eine Gruppe divergenter Lamellen vorzusehen, die jeweils kreisförmig angeordnet sind. Die einzelnen Lamellen sind für ihre Verstellbarkeit mit Aktoren versehen. Eine solche Schubdüse ist beispielsweise aus der US 9 464 594 B2 sowie von der Triebwerken der Kampfflugzeuge McDonnell Douglas F-15, Suchoi Su-27 und Suchoi Su-34 bekannt. Nachteilig an Schubdüsen in Iris/Petal-Bauweise sind ein komplexer Aufbau, eine hohe Wartungsintensivität, eine komplexe Steuerung und ein relativ hohes Gewicht aufgrund der Notwendigkeit einer Vielzahl von Aktoren. Auch entstehen an den einzelnen Lamellen hohe Strömungsverluste.

Aus der EP 2 966 267 A1 ist eine Schubdüsenanordnung bekannt, bei der eine Gasturbine separate Schubdüsen für den Nebenstromkanal, den Primärstromkanal und für einen Mischer aufweist. Dem Mischer ist dabei ein axial verschiebbarer Verkleidungsring zugeordnet, dessen axiale Position den Austrittsquerschnitt der dem Mischer zugeordneten Schubdüse verändert.

Im Kampfflugzeug Messerschmidt 262 war ein Triebwerk realisiert, das eine Schubdüse mit einem Zentralkörper umfasste, der zur Einstellung der Düsenaustrittsfläche axial verstellbar war.

Die US 3 598 318 A beschreibt ein Turbofantriebwerk mit einer gattungsgemäßen konvergent-divergenten Schubdüse, die zwischen einem Zentralkörper und einer Gehäusewand ausgebildet ist. An dem Zentralkörper sind verschwenkbare Klappen angeordnet. In einer ersten Position erstrecken diese sich im Inneren der Schubdüse und bilden dabei eine ringförmige Struktur. Sie dienen in der ersten Position dazu, den Gasstrom in der Schubdüse in einen inneren und einen äußeren Bereich aufzuteilen. In einer zweiten Position liegen die Klappen am Zentralkörper an. In einer dritten Position sind die Klappen derart aufgestellt, dass sie den Gasstrom in der Schubdüse blockieren.

Aus der US 2012/0128467 A1 ist ein Turbofantriebwerk bekannt, bei dem stromaufwärts einer Schubdüse die Luftströmung in einem Bypasskanal über eine Klappenanordnung in zwei Teilströme aufgeteilt wird. Dabei sind im Bypasskanal innere Verkleidungselemente und äußere Verkleidungselemente sowie eine verschiebbare Klappe vorgesehen. Durch Verschieben sämtlicher dieser Elemente können die Querschnittsflächen, über die der Luftstrom im Bypasskanals in zwei Teilströme aufgeteilt wird, variiert werden. Die Klappenanordnung dient als Durchflussbegrenzer.

Der vorliegenden Erfindung liegt die Aufgabe zugrunde, eine für einen Überschallbetrieb geeignete Schubdüse eines Turbofan-Triebwerks sowie ein Verfahren bereitzustellen, die es in effizienter Weise ermöglichen, die Düsenhalsfläche einzustellen.

Diese Aufgabe wird durch eine Schubdüse mit den Merkmalen des Patentanspruchs 1 und ein Verfahren mit den Merkmalen des Patentanspruchs 13 gelöst. Ausgestaltungen der Erfindung sind in den Unteransprüchen angegeben.

Danach sieht die vorliegende Erfindung gemäß einem Erfindungsaspekt vor, in einer konvergent-divergenten Schubdüse einen zwischen einer ersten Position und einer zweiten Position in axialer Richtung verschiebbaren Verkleidungsring bereitzustellen. Die Innenwand der Schubdüse und der Verkleidungsring sind derart ausgebildet und zueinander positioniert, dass der Verkleidungsring in der ersten Position radial beanstandet und dabei radial innen zur Innenwand verläuft, wobei ein ringförmiger Bypass-Kanal bereitgestellt wird, der zwischen dem Verkleidungsring und der Innenwand der Schubdüse verläuft. In der zweiten Position liegt der Verkleidungsring dagegen an der Innenwand an, so das der Bypass-Kanal verschlossen ist bzw. ein solcher effektiv nicht mehr existiert. Als Düsenhalsfläche wird dabei die engste Querschnittsfläche des Strömungskanals und als Düsenaustrittsfläche die Querschnittsfläche des Strömungskanals am hinteren Ende der Schubdüse bezeichnet.

Dabei stellt der Bypass-Kanal eine zusätzliche Querschnittsfläche des Strömungskanals bereit. Der Bypass-Kanal wird in der ersten Position dadurch gebildet, dass der Verkleidungsring über seine gesamte Länge radial beabstandet und dabei radial innen zur Innenwand verläuft. Der Bereich zwischen dem Verkleidungsring und der Innenwand bildet den Bypass-Kanal.

Die Erfindung beruht somit auf dem Gedanken, die Düsenhalsfläche mittels eines in axialer Richtung verstellbaren Verkleidungsrings zu variieren, wobei abhängig von der axialen Stellung des Verkleidungsrings ein Bypass-Kanal eine zusätzliche Querschnittsfläche, die zur Düsenhalsfläche beiträgt, bereitstellt. Insbesondere wird in der ersten Position, d.h. der einen Extremposition des Verkleidungsrings die Düsenhalsfläche durch die Summe der kleinsten Querschnittsfläche des Verkleidungsrings und der kleinsten Querschnittsfläche des Bypass-Kanals gebildet. In der zweiten Position, d.h. der anderen Extremposition wird die Düsenhalsfläche dagegen allein durch die engste Querschnittsfläche des Verkleidungsrings gebildet. Während der axialen Bewegung des Verkleidungsrings von der ersten Position in die zweite Position reduziert sich dabei die durch den Bypass-Kanal bereitgestellte zusätzliche Querschnittsfläche, bis sie in der zweiten Position bei null liegt. Umgekehrt öffnet sich sukzessive der Bypass-Kanal, wenn der Verkleidungsring von der zweiten Position in Richtung der ersten Position verschoben wird und er sich dabei von der Innenwand der Schubdüse entfernt. Der Verkleidungsring kann dabei eine, mehrere oder beliebig viele axiale Positionen zwischen der ersten Position und der zweiten Position einnehmen, d.h. er ist nicht darauf beschränkt, sich in der ersten oder zweiten Position zu befinden. Hierdurch kann die durch den Bypass-Kanal bereitgestellte zusätzliche Querschnittsfläche feinstufig eingestellt werden.

Die vorliegende Erfindung ermöglicht damit eine Einstellung des Expansionsgrads des Strömungskanals hinter der Düsenhalsfläche bzw. des Verhältnisses von Düsenaustrittsfläche zu Düsenhalsfläche, indem bei feststehender Düsenaustrittsfläche die Düsenhalsfläche variiert wird.

Die Erfindung ermöglicht dabei die Einstellung des Expansionsgrads ohne die Notwendigkeit, die Innenwand der Schubdüse, die die radial äußere Berandung des Strömungskanals in der Schubdüse darstellt, verstellbar ausgestalten zu müssen. Eine Änderung der Düsenhalsfläche wird durch eine axiale Verschiebung des Verkleidungsrings und eine damit verbundene Bereitstellung einer zusätzlichen Querschnittsfläche, die zur Düsenhalsfläche beiträgt, in einem Bypass-Kanal erreicht. Damit entfällt eine ansonsten erforderliche aufwendige und gewichtsintensive Ausbildung der Schubdüse als Schubdüse mit variabler Kontur, beispielsweise als Iris/Petal-Düse mit einer Vielzahl einzelner verstellbarer Lamellen, so dass Komplexität und Gewicht der Schubdüse durch die Erfindung reduziert sind. Ein weiterer Vorteil besteht darin, dass mit dem Wegfall von Lamellen zur Bildung der Innenwand der Schubdüse eine glatte äußere Berandung des Strömungskanals durch die Schubdüse bereitgestellt werden kann.

Eine Ausgestaltung der Erfindung sieht vor, dass die erste Position eine stromaufwärtige Position und die zweite Position eine stromabwärtige Position ist, wobei der Bypass-Kanal in der stromaufwärtigen Position zwischen dem Verkleidungsring und der Innenwand der Schubdüse ausbildet ist und in der stromabwärtigen Position der Verkleidungsring an der Innenwand anliegt. Die stromaufwärtige Position wird auch als ausgefahrene Position und die stromaufwärtige Position auch als Stauposition bezeichnet, da in letzterer der Verkleidungsring an der Innenwand der Schubdüse anliegt.

Gemäß einer Ausgestaltung der Erfindung weist der Verkleidungsring einen stromaufwärtigen Bereich auf, der in Strömungsrichtung konvergiert. Insbesondere kann vorgesehen sein, dass der Verkleidungsring in seinem stromaufwärtigen Bereich konisch ausgebildet ist, mit einer in Strömungsrichtung konvergierenden Querschnittsfläche. An den stromaufwärtigen Bereich schließt sich stromabwärts ein zylindrischer Bereich und/oder ein in Strömungsrichtung divergenter Bereich an. Im - sofern vorhanden - zylindrischen Bereich oder alternativ im Übergang vom stromaufwärtigen Bereich zum divergenten stromabwärtigen Bereich weist der Verkleidungsring somit ein Minimum seiner Querschnittsfläche auf. Dabei kann vorgesehen sein, dass der Verkleidungsring im Bereich seines Minimums eine Ausbuchtung aufweist.

Gemäß einer Ausgestaltung weist der Verkleidungsring angrenzend an den stromaufwärtigen Bereich einen zylindrischen Bereich und angrenzend an den zylindrischen Bereich einen stromabwärtigen Bereich auf, wobei letzterer in Strömungsrichtung divergiert. Der Verkleidungsring besteht somit gemäß dieser Ausführungsvariante aus drei axial aufeinanderfolgenden Bereichen, einem konvergenten Bereich, einem zylindrischen Bereich und einem divergenten Bereich.

Die Innenwand der Schubdüse bildet ebenfalls einen konvergente Bereich aus, in dem die Querschnittsfläche der Innenwand in Strömungsrichtung konvergiert. In dem konvergenten Bereich ist die Innenwand der Schubdüse beispielsweise konisch ausgebildet. Stromabwärts des konvergenten Bereichs bildet die Innenwand einen zylindrischen und/oder einen divergenten Bereich aus.

Dabei ist vorgesehen, dass der stromaufwärtige Bereich des Verkleidungsrings, der in Strömungsrichtung konvergiert, und der konvergente Bereich der Innenwand sich zumindest teilweise über den gleichen axialen Bereich der Schubdüse erstrecken, wenn der Verkleidungsring sich in der ersten Position befindet. Eine Ausgestaltung hierzu sieht vor, dass der stromaufwärtigen Bereich des Verkleidungsrings und der konvergente Bereich der Innenwand im Wesentlichen parallel zueinander verlaufen, wenn der Verkleidungsring sich in der ersten Position befindet. Hierdurch wird ein Bypass-Kanal im wesentlichen konstanten Querschnitts bereitgestellt, in dem die Strömung verlustarm strömen kann.

Eine weitere Ausgestaltung sieht vor, dass die stromaufwärtige Kante des stromaufwärtigen Bereichs des Verkleidungsrings in der zweiten Position an der Innenwand der Schubdüse anliegt. Der Verkleidungsring liegt somit in der zweiten Position entlang einer Umfangslinie an der Innenwand an. Die Umfangslinie liegt dabei in einer Ebene, die senkrecht zur axialen Richtung bzw. zur Maschinenachse verläuft. Das Anliegen des Verkleidungsrings in der zweiten Position entlang einer Umfangslinie an der Innenwand stellt jedoch nur ein Ausführungsbeispiel dar. Grundsätzlich kann der Verkleidungsring in der zweiten Position auch entlang einer Umfangsfläche an der Innenwand anliegen. Dies hängt von der genauen Formgebung von Verkleidungsring und Innenwand ab.

Eine Ausgestaltung sieht vor, dass die Vorderkante des stromaufwärtigen Bereichs des Verkleidungsrings im konvergenten Bereich der Innenwand oder am Übergang des konvergenten Bereichs zu einem sich daran stromabwärts anschließenden zylindrischen oder divergenten Bereich an der Innenwand der Schubdüse anliegt.

Gemäß einer Ausgestaltung der Erfindung ist die Innenwand der Schubdüse, die die radial äußere Berandung des Strömungskanals in der Schubdüse bildet, nicht verstellbar ausgebildet. Wie bereits erläutert, wird eine Änderung der Düsenhalsfläche durch axiales Verschieben des Verkleidungsrings erreicht. Damit entfällt eine ansonsten erforderliche, jedoch aufwendige und gewichtsintensive Ausbildung der Schubdüse als Schubdüse mit variabler Kontur. Gleichwohl wird darauf hingewiesen, dass grundsätzlich ein axial verschiebbarer Verkleidungsring auch mit einer variablen oder teilweise variablen Außenkontur der Schubdüse kombiniert werden kann.

Die Schubdüse kann als dreidimensionale Schubdüse oder als zweidimensionale Schubdüse ausgebildet sein. Im Falle einer dreidimensionalen Schubdüse weist deren Innenwand einen kreisförmigen Querschnitt auf. Der Verkleidungsring ist dementsprechend als kreisförmiger Ring ausgebildet, der in Hinblick auf die Maschinenachse des Turbofan-Triebwerks rotationssymmetrisch ausgebildet ist. Im Falle einer zweidimensionalen Schubdüse ist deren Innenwand im Querschnitt rechteckförmig ausgebildet. Der Verkleidungsring kann in diesem Fall ebenfalls im Querschnitt rechteckförmig ausgebildet sein (mit Abrundungen an den Kanten).

Eine Ausgestaltung der Erfindung sieht vor, dass sowohl die Innenwand und die Außenwand des Verkleidungsrings als auch die Innenwand der Schubdüse im mathematischen Sinne glatt ausgebildet, also nicht mit Kanten versehen sind.

Der Verkleidungsring der vorliegenden Erfindung ist gemäß einer Ausgestaltung einteilig ausgebildet. Er besteht beispielsweise aus einem metallischen oder einem keramischen

Material. Grundsätzlich ist es jedoch alternativ möglich, dass der Ring aus einer Mehrzahl von Teilringen besteht, die jeweils axial verschiebbar sind.

Gemäß einer Ausgestaltung der Erfindung weist die Schubdüse keinen Zentralkörper auf, der sich entlang der Maschinenachse des Turbofan-Triebwerks erstreckt. Ein solcher Zentralkörper ist nicht erforderlich.

Gemäß einer Ausgestaltung ist eine konvergent-divergente Schubdüse für ein Turbofan-Triebwerk eines Überschallflugzeugs vorgesehen, die aufweist:
- eine Innenwand, die einen Strömungskanal durch die Schubdüse radial außen begrenzt, wobei der Strömungskanal eine Düsenhalsfläche und eine Düsenaustrittsfläche ausbildet, und
- einen zwischen einer ersten Position und einer zweiten Position in axialer Richtung verschiebbaren Verkleidungsring, wobei
- die Innenwand der Schubdüse und der Verkleidungsring derart ausgebildet und zueinander positioniert sind, dass der Verkleidungsring in der ersten Position radial beabstandet zur Innenwand verläuft, wobei ein ringförmiger Bypass-Kanal bereitgestellt ist, der zwischen dem Verkleidungsring und der Innenwand der Schubdüse verläuft, und der Verkleidungsring in der zweiten Position an der Innenwand anliegt,
- der Verkleidungsring einen stromaufwärtigen Bereich aufweist, der in Strömungsrichtung konvergiert, wobei sich an den stromaufwärtigen Bereich stromabwärts ein zylindrischer Bereich und/oder ein in Strömungsrichtung divergierender Bereich anschließt,
- die Innenwand der Schubdüse einen konvergenten Bereich ausbildet, in dem die Querschnittsfläche der Innenwand in Strömungsrichtung konvergiert, und
- die stromaufwärtige Kante des stromaufwärtigen Bereichs des Verkleidungsrings in der zweiten Position an der Innenwand der Schubdüse anliegt.

In einem weiteren Erfindungsaspekt betrifft die Erfindung eine Schubdüse für ein Turbofan-Triebwerk eines Überschallflugzeugs, wobei die Schubdüse einen Strömungskanal mit einer Düsenaustrittsfläche ausbildet. Es ist vorgesehen, dass die Schubdüse an ihrem stromabwärtigen Ende einen zwischen einer ersten, stromaufwärtigen Position und einer zweiten, stromabwärtigen Position in axialer Richtung verschiebbaren Düsenaustrittsring ausbildet. Dabei bildet die Schubdüse in der zweiten Position des Düsenaustrittsrings einen ringförmigen Zusatz-Strömungskanal aus, der sich von der Außenhaut der Schubdüse zum Strömungskanal erstreckt und über den Umgebungsluft in den Strömungskanal strömen kann. Der Zusatz-Strömungskanal ist dabei zwischen dem stromaufwärtigen Ende des Düsenaustrittsrings und daran sich stromaufwärts anschließenden Wandbereichen der Schubdüse ausgebildet.

In der ersten Position des Düsenaustrittsrings ist der ringförmige Zusatz-Strömungskanal dagegen geschlossen. Zwischen der ersten und der zweiten Position des Düsenaustrittsrings vergrößert sich die Querschnittsfläche des Zusatz-Strömungskanals sukzessive. Dabei kann vorgesehen sein, dass der Düsenaustrittsring entsprechende Zwischenpositionen einnehmen kann. Der Zusatz-Strömungskanal ist derart ausgebildet und geformt ist, dass die aus dem Zusatz-Strömungskanal austretende Luft eine radial äußere Randströmung im Strömungskanal bildet.

Hierdurch erreicht die Erfindung gemäß diesem Erfindungsaspekt eine effektive Reduzierung der Düsenaustrittsfläche für das im Strömungskanal der Schubdüse strömende Gas (das zuvor die Düsenhalsfläche passiert hat). Denn die durch den Zusatz-Strömungskanal einströmende Luft legt sich als Randströmung an die äußere Berandung des Strömungskanals, so dass das im Strömungskanal strömende Gas nicht bis an die äußere Berandung des Strömungskanals strömt. Damit wird indirekt die Düsenaustrittsfläche von der geometrischen Düsenaustrittsfläche auf eine effektive Düsenaustrittsfläche reduziert. Über die axiale Stellung des Düsenaustrittsrings kann somit die effektive Düsenaustrittsfläche eingestellt werden.

Eine Ausgestaltung sieht vor, der Düsenaustrittsring eine an die Umgebung angrenzende Außenwand und eine den Strömungskanal begrenzende Innenwand ausbildet und der Zusatz-Strömungskanal derart ausgebildet und geformt ist, dass er an seinem stromabwärtigen, dem Strömungskanal zugewandten Ende im Wesentlichen in axialer Richtung verläuft, so dass die aus dem Zusatz-Strömungskanal austretende Luft eine Randströmung bildet, die entlang der Innenwand des Düsenaustrittsrings und unmittelbar angrenzend an diese verläuft. Hierdurch wird sichergestellt, dass die Strömung des Zusatz-Strömungskanals eine Randströmung am Ausgang der Schubdüse bildet.

Eine weitere Ausgestaltung sieht vor, dass die Schubdüse eine konvergent-divergente oder eine konvergent-zylindrische Schubdüse ist und die Schubdüse derart ausgebildet ist, dass das stromabwärtige Ende des Zusatz-Strömungskanals sich stromabwärts des Düsenhalsfläche der Schubdüse befindet.

Der Zusatz-Strömungskanal ist dabei derart gekrümmt, dass seine radiale Erstreckungskomponente stromabwärts abnimmt und seine axiale Erstreckungskomponente stromabwärts zunimmt.

Der erläuterte Erfindungsaspekt eines in axialer Richtung verschiebbaren Düsenaustrittsrings wird gemäß einer Ausgestaltung bei einer Schubdüse realisiert, die einen gemäß Patentanspruch 1 axial verschiebbaren Verkleidungsring aufweist. Dies ist aber nicht notwendigerweise der Fall. So kann ein in axialer Richtung verschiebbarer Düsenaustrittsring grundsätzlich bei beliebigen Schubdüsen eingesetzt werden, um die effektive Düsenhalsfläche einstellen zu können, beispielsweise auch bei Schubdüsen in Iris/Petal-Ausführung. Bei der Schubdüse, die einen axial verschiebbaren Verkleidungsring aufweist, kann es sich grundsätzlich um eine konvergent-divergente Schubdüse, eine konvergent-zylindrische Schubdüse oder eine nur konvergente Schubdüse handeln. Die Schubdüse kann als dreidimensionale Schubdüse oder als zweidimensionale Schubdüse ausgebildet sein.

Gemäß einem weiteren Erfindungsaspekt betrifft die Erfindung ein Verfahren zur Einstellung der Düsenhalsfläche in einer Schubdüse eines Turbofan-Triebwerks eines Überschallflugzeugs. Das Verfahren umfasst die Schritte:
- Bereitstellen eines zwischen einer ersten Position und einer zweiten Position in axialer Richtung verschiebbaren Verkleidungsrings, der in der ersten Position unter Ausbildung eines Bypass-Kanals radial beabstandet und dabei radial innen zur Innenwand verläuft und der in der zweiten Position an der Innenwand anliegt, wobei der Bypass-Kanal in der zweiten Position geschlossen ist, und
- Verschieben des Verkleidungsrings zwischen der ersten Position und der zweiten Position zur Einstellung der gewünschten kleinsten Querschnittsfläche des Bypass-Kanals, wobei
- in der ersten Position die Düsenhalsfläche durch die Summe der kleinsten Querschnittsfläche des Verkleidungsrings und der kleinsten Querschnittsfläche des Bypass-Kanals gebildet ist, und
- in der zweiten Position die Düsenhalsfläche durch die engste Querschnittsfläche des Verkleidungsrings gebildet ist.

Dabei wird zur Einstellung einer maximalen Düsenhalsfläche der Verkleidungsring in eine maximal stromaufwärtigen Position als erste Position verschoben. Zur Einstellung einer minimalen Düsenhalsfläche wird der Verkleidungsring in eine maximal stromabwärtige Position als zweite Position verschoben. Zur Einstellung einer Düsenhalsfläche, die zwischen der maximalen und der minimalen Düsenhalsfläche liegt, wird der Verkleidungsring in eine Position verschoben, die zwischen der maximal stromaufwärtigen und der maximal stromabwärtigen Position liegt.

Es wird darauf hingewiesen, dass die vorliegende Erfindung bezogen auf ein zylindrisches Koordinatensystem beschrieben ist, das die Koordinaten x, r und ϕ aufweist. Dabei gibt x die axiale Richtung, r die radiale Richtung und ϕ den Winkel in Umfangsrichtung an. Die axiale Richtung ist dabei identisch mit der Maschinenachse des Turbofan-Triebwerks. Von der x-Achse ausgehend zeigt die radiale Richtung radial nach außen. Begriffe wie "vor", "hinter", "vordere" und "hintere" beziehen sich immer auf die axiale Richtung bzw. die Strömungsrichtung im Triebwerk. Die Bezeichnung "vor" bedeutet somit "stromaufwärts" und die Bezeichnung "hinter" bedeutet "stromabwärts". Begriffe wie "äußere" oder "innere" beziehen sich immer auf die radiale Richtung.

Die Erfindung kann in einem Turbofan-Triebwerk mit einer Schubdüse gemäß Anspruch 1 und einem zivilen oder militärischen Überschallflugzeug mit einem solchen Turbofan-Triebwerk eingesetzt werden.

Die Erfindung wird nachfolgend unter Bezugnahme auf die Figuren der Zeichnung anhand mehrerer Ausführungsbeispiele näher erläutert. Es zeigen:
- Figur 1: ein Ausführungsbeispiel einer Schubdüse eines Turbofan-Triebwerks, das für einen Überschallflug vorgesehen und ausgebildet ist, wobei die Schubdüse einen axial verschiebbaren Verkleidungsring aufweist und der Verkleidungsring in zwei axial beanstandeten Positionen dargestellt ist;
- Figur 2: die Schubdüse der Figur 1 in einer perspektivischen, geschnittenen Ansicht schräg von vorne, wobei die Schubdüse in einer axial hinteren Position angeordnet ist;
- Figur 3: die Schubdüse der Figur 1 in einer perspektivischen, geschnittenen Ansicht schräg von hinten, wobei die Schubdüse in einer axial hinteren Position angeordnet ist;
- Figur 4: einen Längsschnitt durch die Schubdüse der Figur 1, wobei die Schubdüse in einer axial hinteren Position entsprechend den Figuren 2 und 3 angeordnet ist;
- Figur 5: die Schubdüse der Figur 1 in einer perspektivischen, geschnittenen Ansicht schräg von vorne, wobei die Schubdüse in einer axial vorderen Position angeordnet ist;
- Figur 6: die Schubdüse der Figur 1 in einer perspektivischen, geschnittenen Ansicht schräg von hinten, wobei die Schubdüse in einer axial vorderen Position angeordnet ist;
- Figur 7: einen Längsschnitt durch die Schubdüse der Figur 1, wobei die Schubdüse in einer axial vorderen Position entsprechend den Figuren 5 und 6 angeordnet ist;
- Figur 8: im Längsschnitt ein weiteres Ausführungsbeispiel einer Schubdüse mit einem in axialer Richtung verschiebbaren Verkleidungsring, wobei die Schubdüse des Weiteren an ihrem stromabwärtigen Ende einen axial verschiebbaren Düsenaustrittsring ausbildet;
- Figur 9: die Schubdüse der Figur 8 mit anderen axialen Positionen von Verkleidungsring und Düsenaustrittsring;
- Figur 10: die Schubdüse der Figur 8 mit anderen axialen Positionen von Verkleidungsring und Düsenaustrittsring; und
- Figur 11: die Schubdüse der Figur 8 mit anderen axialen Positionen von Verkleidungsring und Düsenaustrittsring.

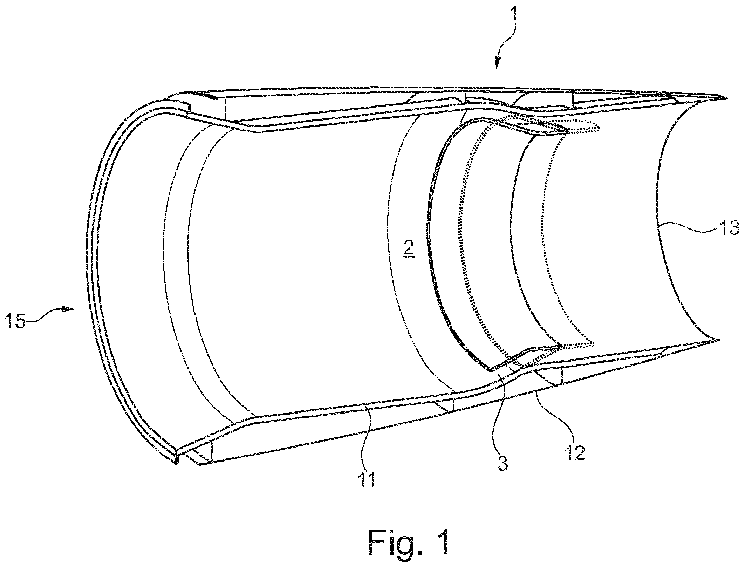

Die Figur 1 zeigt eine konvergent-divergente Schubdüse 1 eines Turbofan-Triebwerks, das dafür vorgesehen und geeignet ist, in einem zivilen oder militärischen Überschallflugzeug eingesetzt zu werden und dementsprechend für Betriebszustände im subsonischen Bereich, im transsonischen Bereich und im supersonischen Bereich ausgelegt ist.

Das Turbofan-Triebwerk umfasst in an sich bekannter Weise einen Triebwerkseinlauf, einen Fan, der mehrstufig ausgebildet sein kann, einen Primärstromkanal, der durch ein Kerntriebwerk führt und einen Sekundärstromkanal oder Bypass-Kanal, der an dem Kerntriebwerk vorbei führt. Des Weiteren ist ein Mischer vorgesehen, der Luft des Sekundärstromkanals und des Primärstromkanals hinter dem Kerntriebwerk mischt. Hinter dem Mischer bildet das Triebwerk einen Strömungskanal, der sich durch die Schubdüse erstreckt. Optional können zusätzlich ein Nachbrenner und/oder ein Schubumkehrer vorgesehen sein.

Der Triebwerkseinlauf bildet einen Überschall-Lufteinlauf und ist dementsprechend dafür vorgesehen und geeignet, die einströmende Luft auf Geschwindigkeiten unterhalb Ma 1,0 (Ma = Mach-Zahl) zu verzögern. Der Triebwerkseinlauf kann angeschrägt ausgebildet sein, um im Überschallflug eine günstige Verdichtungsstosskonfiguration zu erzielen.

Das Kerntriebwerk weist einen Verdichter, eine Brennkammer und eine Turbine auf. Beispielsweise umfasst der Verdichter einen Hochdruckverdichter und einen Niederdruckverdichter, wobei ein Niederdruckverdichter durch die nabennahen Bereiche des Fans gebildet ist. Die hinter der Brennkammer angeordnete Turbine umfasst eine Hochdruckturbine und eine Niederdruckturbine. Die Hochdruckturbine treibt eine Hochdruckwelle an, die die Hochdruckturbine mit dem Hochdruckverdichter verbindet. Die Niederdruckturbine treibt eine Niederdruckwelle an, die die Niederdruckturbine mit dem Fan verbindet. Gemäß einer alternativen Ausgestaltung kann das Turbofantriebwerk zusätzlich einen Mitteldruckverdichter, eine Mitteldruckturbine und eine Mitteldruckwelle aufweisen.

Das Turbofan-Triebwerk ist in einer Triebwerksgondel angeordnet. Diese ist beispielsweise über einen Pylon mit dem Flugzeugrumpf verbunden.

Das Turbofan-Triebwerk umfasst eine Maschinenachse 10 oder Triebwerksmittellinie. Die Maschinenachse definiert eine axiale Richtung des Turbofan-Triebwerks. Eine radiale Richtung des Turbofan-Triebwerks verläuft senkrecht zur axialen Richtung.

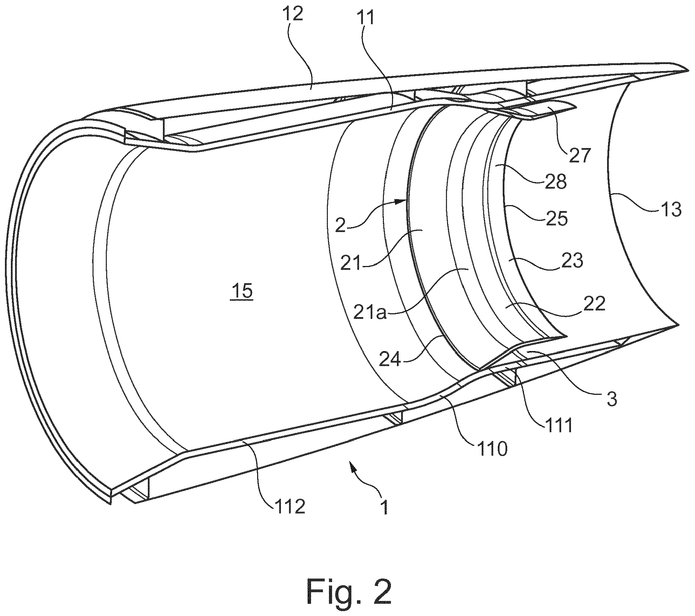

Die Figur 1 zeigt ein Ausführungsbeispiel einer Schubdüse 1, die einen axial verschiebbaren Verkleidungsring 2 umfasst. Die Figur 1 verdeutlicht dabei unterschiedliche axiale Positionen des Verkleidungsrings 2. Eine genauere Beschreibung des Verkleidungsrings 2 und der mit diesem erzielten Vorteile und Funktionen erfolgt im Hinblick auf die Figuren 2 bis 7.

Strukturell wird die Schubdüse 1 durch eine Innenwand 11 und eine Außenwand 12 gebildet. Die Außenwand 12 ist radial außen zur Innenwand 11 ausgebildet und grenzt an die Umgebung an. Die Innenwand 11 bildet die radial äußere Berandung eines Strömungskanals 15 in der Schubdüse 1. Der Strömungskanal 15 befindet sich dabei hinter einem Mischer des Turbofan-Triebwerks, der die Strömung im Primärstromkanal und die Strömung im Sekundärstromkanal des Turbofan-Triebwerks mischt. Die Innenwand 11 und die Außenwand 12 laufen stromabwärts spitz aufeinander zu und bilden an ihrem stromabwärtigen Ende eine Düsenaustrittskante 13.

Der Verkleidungsring 2 ist in axialer Richtung zwischen einer ersten, stromaufwärtigen bzw. axial vorderen Position und einer zweiten, stromabwärtigen bzw. axial hinteren Position verschiebbar, wobei die Figur 1 den Verkleidungsring 2 in beiden Positionen zeigt. Abhängig von der axialen Position öffnet oder schließt der Verkleidungsring 2 einen Bypass-Kanal 3, der eine zusätzliche Querschnittsfläche bereitstellt. Hierdurch kann die Düsenhalsfläche des Strömungskanals 15 eingestellt werden. Natürlich kann der Verkleidungsring 2 auch Positionen einnehmen, die zwischen der ersten und der zweiten Position liegen.

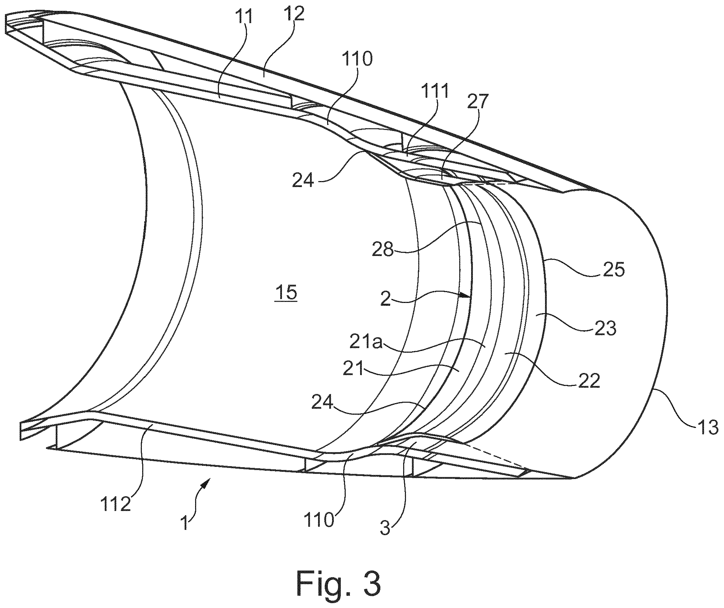

Die Figuren 2 bis 4 zeigen die Schubdüse 1 in detaillierterer Darstellung, wobei die Figuren 2 und 3 perspektivische Darstellungen und die Figur 3 einen Längsschnitt durch die Maschinenachse 10 darstellen. Wie bereits in Bezug auf die Figur 1 erläutert, umfasst die Schubdüse eine Innenwand 11, eine Außenwand 12 und einen axial verschiebbaren Verkleidungsring 2. In der Schubdüse 1 verläuft der Strömungskanal 15, der durch die Innenwand 11 begrenzt wird.

Die Innenwand 11 der Schubdüse 1 weist in Strömungsrichtung in einem axial vorderen Abschnitt einen allgemein konvergenten Verlauf auf, d.h. die Querschnittsfläche des Strömungskanals 15, die durch die Innenwand 11 radial außen berandet ist, nimmt in Strömungsrichtung ab. Sie erreicht ihr Minimum am stromabwärtigen Ende eines konisch konvergierenden Bereichs 110 der Innenwand 11. Dabei es nicht zwingend, dass die Querschnittsfläche stetig abfällt. Vielmehr kann, wie dargestellt, ein Zwischenbereich 112 vorgesehen sein, in dem die Querschnittsfläche ansteigt oder alternativ konstant bleibt, bevor die Querschnittsfläche der Innenwand 11 im Bereich 110 zu ihrem Minimum abfällt.

Stromabwärts des konischen Bereichs 110 bildet die Innenwand 11 einen divergenten Bereich 111 aus, in dem die Querschnittsfläche der Innenwand 11 ansteigt, Der divergente Bereich erstreckt sich bis zur Düsenaustrittskante 13. Alternativ kann statt eines divergenten Bereichs 111 ein zylindrischer Bereich vorgesehen sein oder ein zylindrischer Bereich, an den sich ein divergenter Bereich anschließt.

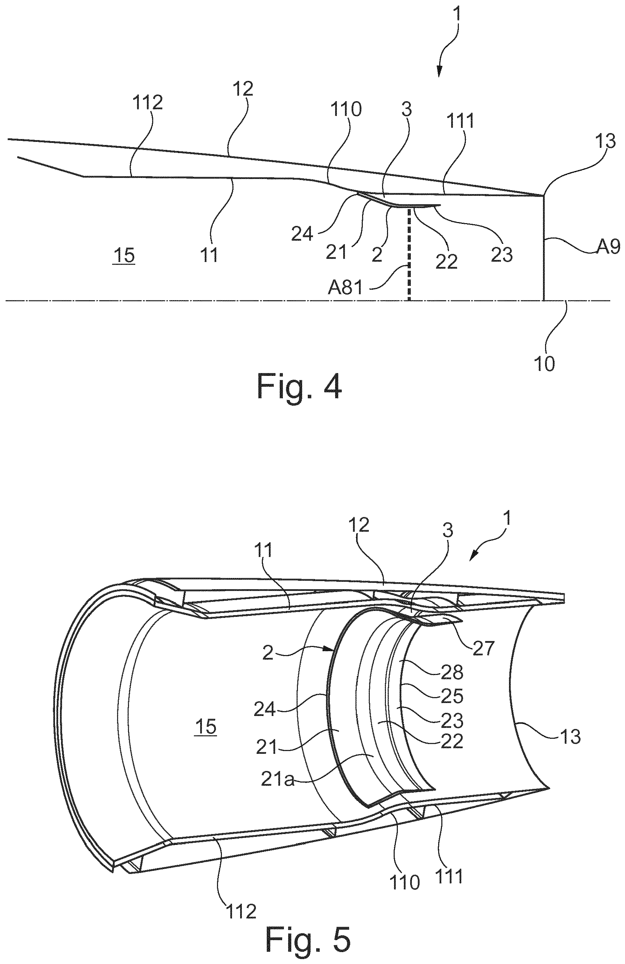

Der Verkleidungsring 2 ist rotationssymmetrisch bezüglich der Maschinenachse 10 (vgl. Figur 4) des Turbofan-Triebwerks ausgebildet. Er umfasst eine Vorderkante 24, eine Hinterkante 25, eine Außenseite 27, die der Innenwand 11 zugewandt ist, und eine Innenseite 28. In axialer Richtung bildet er in Strömungsrichtung hintereinander drei aneinander angrenzende Bereiche aus: einen stromaufwärtigen Bereich 21, der konisch geformt ist und in Strömungsrichtung konvergiert, einen zylindrischen Bereich 22, dessen Durchmesser über seine axiale Länge konstant ist, und einen divergenten Bereich 23, der konisch geformt ist und dabei in Strömungsrichtung divergiert. Zum zylindrischen Bereich 22 hin bildet der stromaufwärtige konische Bereich 21 dabei einen Übergangsbereich 21a aus, in dem der konische Bereich 21 in den zylindrischen Bereich 22 übergeht und in dem er dementsprechend gekrümmt ist.

Wie in der Figur 4 erkennbar, bildet die Schubdüse 1 an der Austrittskante 13 eine Düsenaustrittsfläche A9.

Der Verkleidungsring 2 bildet eine kleinste Querschnittsfläche A81 im zylindrischen Bereich 22 aus. In alternativen Ausgestaltungen kann vorgesehen sein, dass der Verkleidungsring eine konvexe Ausbuchtung aufweist und im Bereich der Ausbuchtung seine kleinste Querschnittsfläche ausbildet.

Die Schubdüse 1 ist in den Figuren 2 und 3 in der zweiten, stromabwärtigen bzw. axial hinteren Position dargestellt. In dieser Position liegt die stromaufwärtige Vorderkante 24 des Verkleidungsrings 2 am stromabwärtigen Ende des konischen Bereichs 110 der Innenwand 11 an. Hierdurch ist ein Bypass-Kanal 3, der sich in der Position der Figuren 2 bis 4 hinter der Vorderkante 24 zwischen der Außenseite 27 des Verkleidungsrings 2 und der Innenwand 11 erstreckt, geschlossen.

Da der Bypass-Kanal 3 aufgrund der Anordnung des Verkleidungsrings 2 in der axial hinteren Position verschlossen ist, fließt die gesamte Strömung im Strömungskanal 15 durch die durch den Verkleidungsring 2 gebildeten Querschnittsfläche, wobei der Verkleidungsring 2 gemäß der Figur 4 als kleinste Querschnittsfläche die Querschnittsfläche A81 ausbildet. Dementsprechend ist die kleinste Querschnittsfläche A81 des Verkleidungsrings in der axial hinteren Position identisch mit der kleinsten Querschnittsfläche des Strömungskanals 15, d.h. mit der Düsenhalsfläche.

Diese Situation ändert sich allerdings, wenn der Verkleidungsring 2 stromaufwärts in die axial vordere Position verschoben wird, wie nachfolgend anhand der Figuren 5-7 erläutert.

Aufgrund der axialen Verschiebung des Verkleidungsrings 2 in die axial vordere Position wird der Bypass-Kanal 3 freigegeben. Er öffnet sich sukzessive mit der Verschiebung des Verkleidungsrings 2 in die stromaufwärtige Richtung. Mit Entfernen der Vorderkante 24 des Verkleidungsrings 2 von der Innenwand 11 bildet die Vorderkante eine Strömungskante, die den Strom im Strömungskanal 15 in einen Strom durch das Innere des Verkleidungsrings 2 und einen Strom durch den Bypass-Kanal 3 aufteilt. Der Bypass-Kanal 3 ist dabei ringförmig und bevorzugt ebenfalls rotationssymmetrisch bezogen auf die Maschinenachse 10 des Turbofan-Triebwerks ausgebildet.

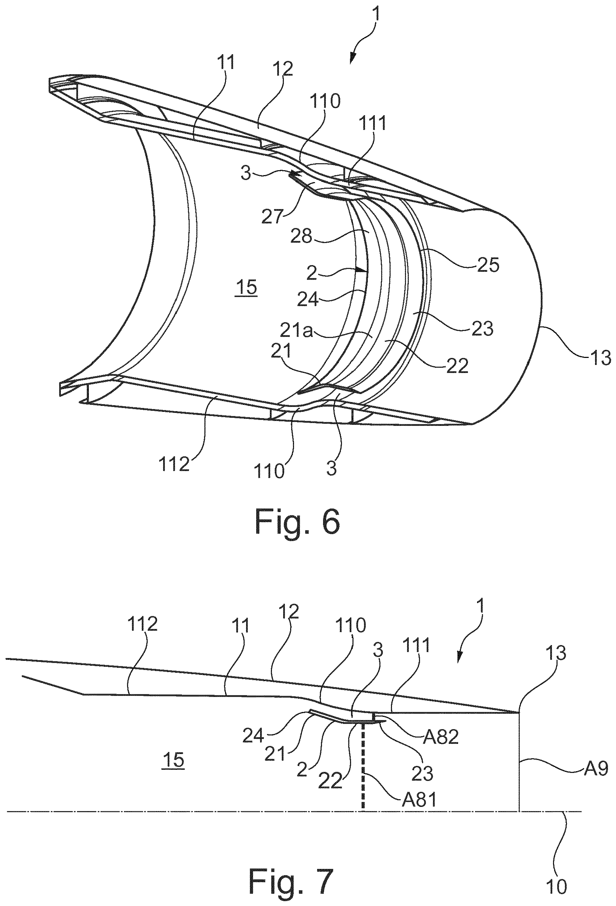

In dem dargestellten Ausführungsbeispiel, jedoch nicht notwendigerweise, ist dabei vorgesehen, dass die Konizität des stromaufwärtigen Bereichs 21 des Verkleidungsrings 2 und die Konizität des konischen Bereichs 110 der Innenwand 11 in gleicher Weise ausgebildet sind, so dass der Verkleidungsring 2 und die Innenwand 11 in den Bereichen 21, 111 im Wesentlichen parallel verlaufen. Dies ist mit dem Vorteil verbunden, dass der Bypass-Kanal 3 zumindest an seinem Eingang eine im Wesentlichen konstante Querschnittsfläche aufweist, so dass sich eine möglichst laminare Strömung ausbilden kann. Hinter dem Eingangsabschnitt des Bypass-Kanals 3 konvergiert der Bypass-Kanal 3 geringfügig und bildet eine engsten Querschnittsfläche A82 des Bypass-Kanals 3 aus, vgl. Figur 7.

Aufgrund dieser zusätzlichen engsten Querschnittsfläche A82 erweitert sich die engste Querschnittsfläche des Strömungskanals 15, d.h. die Düsenhalsfläche wird nunmehr durch die Summe der Querschnittsflächen A81 und A82 gebildet. Dies bedeutet aber, dass die Querschnittsfläche in der axial vorderen Position der Figuren 5-7 gegenüber der axial hinteren Position der Figuren 2-4 zugenommen hat. Über die axiale Position des Verkleidungsrings 2 kann somit die Düsenhalsfläche A81, A82 und damit auch das Verhältnis von Düsenaustrittsfläche A9 zu Düsenhalsfläche A81, A82 eingestellt werden.

Es wird darauf hingewiesen, dass die axiale Lage der engsten Querschnittsfläche A82 des Bypass-Kanals 3 sich von der axialen Lage der engsten Querschnittsfläche A81 des Verkleidungsrings 2 unterscheiden kann, wie es in der Figur 7 dargestellt ist. Dies ist jedoch nicht notwendigerweise der Fall.

Hinter dem Verkleidungsring 2 vereinigen sich die Strömung durch den Bypass-Kanal 3 und die Strömung durch den Verkleidungsring 2 wieder zu einer Strömung, vgl. Figur 7. Dies kann unter vernachlässigbaren Strömungsverlusten erfolgen, wenn der hintere Bereich 23 des Verkleidungsrings 2 in Strömungsrichtung ausgerichtet ist.

Vor der Düsenhalsfläche ist die Strömungsgeschwindigkeit in der Schubdüse bei allen Betriebsmodi bzw. axialen Positionen des Verkleidungsrings kleiner als Ma=1. An der Düsenhalsfläche gilt, dass Ma=1 ist. Hinter der Düsenhalsfläche A8 ist die Strömungsgeschwindigkeit in der Schubdüse bei allen Betriebsmodi außer dem Betriebsmodus "MTO" (MTO = Maximum Takeoff Thrust) größer als Ma=1.

Der Verkleidungsring 2 besteht beispielsweise aus einem metallischen oder einem keramischen Material. Er ist einstückig ausgebildet. In alternativen Ausgestaltungen kann der Verkleidungsring aus mehreren Teilringen bestehen, die beispielsweise den verschiedenen Bereichen 21, 20, 23 entsprechen, wobei die Teilringe gesondert verschiebbar sind.

Zur axialen Verschiebung des Verkleidungsrings 2 in der Schubdüse 1 können verschiedene Verstellmechanismen vorgesehen sein. Gemäß einer ersten Ausgestaltung erfolgt eine Verstellung des Verkleidungsrings 2 über Aktuatoren, die beispielsweise teleskopartig wirkend ausgebildet sind und hydraulisch, pneumatisch oder elektrisch angetrieben werden. Dabei kann vorgesehen sein, dass solche Aktoren entlang des Umfangs jeweils in einem Winkel zueinander angeordnet sind und somit eine fachwerkartige Konstruktion bilden (sogenanntes Thruss Prinzip). Die Aktuatoren sind beispielsweise mit einem Ende an der Innenwand 11 und mit einem oder mehreren anderen Enden an der Außenseite des Verkleidungsrings 2 befestigt. Solche Aktoren sind, wenn auch in anderem Kontext, in der EP 3 081 797 A1 beschrieben.

Gemäß einer zweiten Ausgestaltung erfolgt eine axiale Verschiebung des Verkleidungsrings 2 über eine Linearverstellung. Beispielsweise weist der Verkleidungsring 2 radial nach außen durch den Bypass-Kanal ragende Arme auf, die an einem in der Innenwand 11 gelagerten, in Längsrichtung auf einer Schiene verschiebbaren Schlitten oder dergleichen befestigt sind.

Terminologisch wird auf folgendes hingewiesen: Die für den Ring 2 verwendete Bezeichnung "Verkleidungsring" trägt dem Umstand Rechnung, dass der Ring jedenfalls in der zweiten Position die äußere Berandung des Strömungskanals 15 bildet und insofern Teil der Verkleidung des Strömungskanals ist. Alternativ kann der Verkleidungsring als Verstellring oder als ringförmiger Deflektor bezeichnet werden. Die Bezeichnung "Deflektor" ist insofern zutreffend, als der Ring in allen Positionen außer der zweiten Position die Strömung teilt und in eine Strömung durch den Ring und eine Strömung durch den Bypass-Kanal trennt.

In einer alternativen Ausgestaltung ist die Schubdüse zweidimensional ausgebildet und weist dementsprechend eine den Strömungskanal durch die Schubdüse radial außen begrenzende Innenwand auf, die im Querschnitt rechteckig ist. An mindestens zwei der vier Wände, die dabei den Strömungskanal bilden, liegt ein konvergent-divergenter Verlauf entsprechend den Figuren 1 bis 7 vor (an den beiden Seitenwänden und/oder an der oberen Wand und der unteren Wand). Der Verkleidungsring kann und diesem Fall ebenfalls im Querschnitt rechteckig ausgebildet sein. Der Verkleidungsring und die einzelnen Wände wirken dabei zur Einstellung der Düsenhalsfläche abhängig von der axialen Position des Verkleidungsrings zusammen, in entsprechender Weise wie in Bezug auf eine rotationssymmetrische Schubdüse anhand der Figuren 1 bis 7 beschrieben.

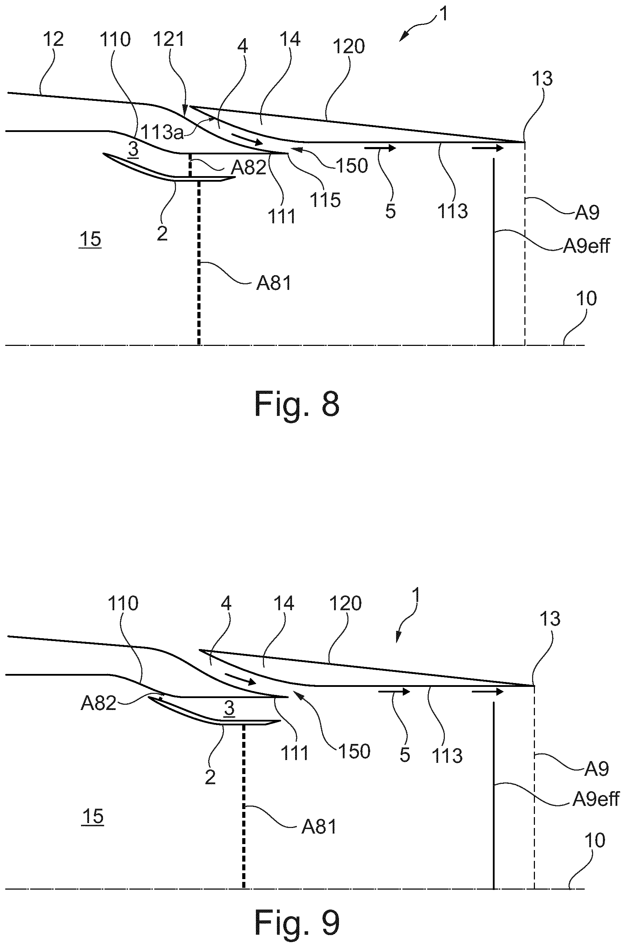

Die Figuren 8 bis 11 zeigen jeweils im Längsschnitt ein weiteres Ausführungsbeispiel der Erfindung mit einem in axialer Richtung verschiebbaren Verkleidungsring 2. Die Verschiebbarkeit des Verkleidungsrings 2 ist wie in Bezug auf die Figuren 1-7 ausgeführt, auf die insofern ergänzend Bezug genommen wird. Die Besonderheit des Ausführungsbeispiels der Figuren 8-11 besteht darin, dass die Schubdüse 1 an ihrem stromabwärtigen Ende - stromabwärts der Düsenhalsfläche - einen verschiebbaren Ring 14 ausbildet, der ebenfalls in axialer Richtung zwischen einer ersten, stromaufwärtigen Position und einer zweiten, stromabwärtigen Position verschiebbar ist. Dieser verschiebbare Ring 14 wird im Folgenden auch als Düsenaustrittsring 14 bezeichnet. Über den Düsenaustrittsring 14 kann wahlweise eine Strömung 5 zugeschaltet werden, die an der Außenberandung des Strömungskanals verläuft und über die dadurch die effektive Düsenaustrittsfläche A9_{eff} am Ende der Schubdüse reduziert und eingestellt werden kann.

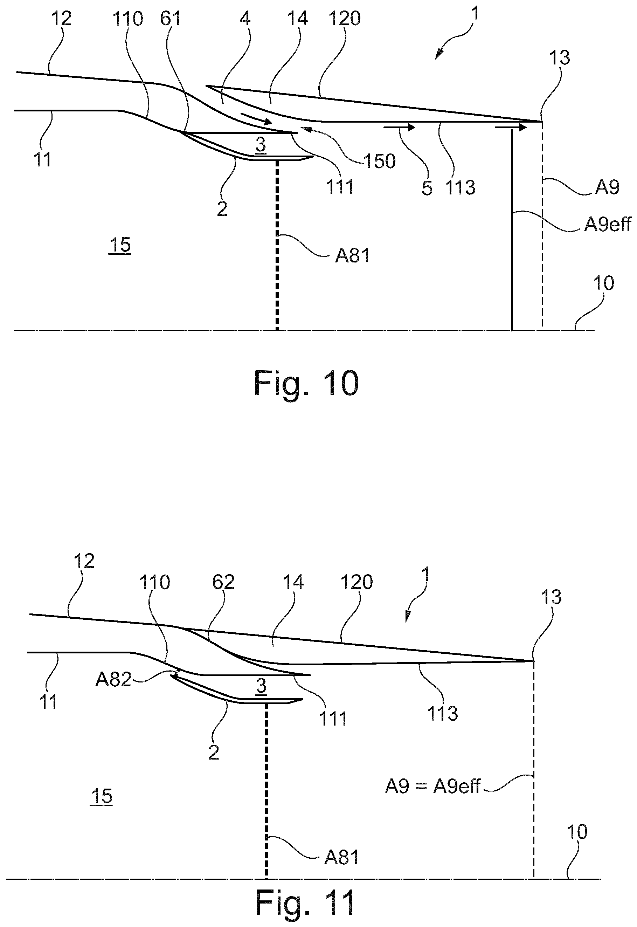

So umfasst die Schubdüse 1 gemäß der Figur 10 eine Innenwand 11 und eine Außenwand 12. Die Innenwand 11 bildet einen konvergierenden Bereich 110 und einen sich daran anschließenden zylindrischen (oder alternativ divergenten) Bereich 111 aus. Ein entsprechend den Figuren 1 bis 7 ausgebildeter Verkleidungsring 2 ist axial verschiebbar angeordnet, wobei in der axialen Stellung der Figur 8 ein Bypass-Kanal 3, der eine zusätzliche Querschnittsfläche A82 bereitstellt, maximal geöffnet, in der Figur 10 geschlossen und in den Figuren 9 und 11 teilweise geöffnet ist. Insofern unterscheidet sich das Ausführungsbeispiel der Figuren 8 bis 11 nicht vom Ausführungsbeispiel der Figuren 1 bis 7.

Der stromabwärtige Bereich der Schubdüse 1 ist bei dem Ausführungsbeispiel der Figuren 8 bis 11 jedoch nicht durch feststehende Wände gebildet, wie es bei den Figuren 1 bis 7 der Fall ist, sondern umfasst einen in axialer Richtung verschiebbaren Düsenaustrittsring 14. Der Ring 14 ist dabei über nicht dargestellte Aktuatoren zwischen einer stromaufwärtigen Position, die in der Figur 11 dargestellt ist, und einer stromabwärtigen Position, die in der Figur 9 dargestellt ist, verschiebbar. In den Figuren 8 und 10 ist er jeweils in einer Zwischenposition dargestellt.

Der Ring 14 umfasst eine Außenwand 120 und eine Innenwand 113. Die Außenwand 120 und die Innenwand 113 laufen stromabwärts aufeinander zu und bilden die Düsenaustrittskante 13 der Schubdüse 1. Die Innenwand 113 bildet die Verlängerung der Innenwand 111, da sie den Strömungskanal 15 am hinteren Ende der Schubdüse radial außen berandet. Sofern der Ring 14 sich nicht in der stromaufwärtigen Position entsprechend der Figur 11 befindet, gibt er einen ringförmigen Zusatz-Strömungskanal 4 frei, über den Luft von der Außenseite des Triebwerks in den Strömungskanal 15 geleitet wird.

Der Zusatz-Strömungskanal 4 wird gemäß der Figur 8 durch Wandbereiche 121, 113a gebildet, die axial beanstandet sind, wobei der Wandbereich 113a weiter stromabwärts als Wandbereich 113 die Innenwand des Strömungskanals 15 bildet. Der Zusatz-Strömungskanal 4 erstreckt sich ringförmig und ist dabei derart ausgebildet, dass er an seinem dem Strömungskanal 15 zugewandten Ende 150 im Wesentlichen in axialer Richtung verläuft. Er öffnet sich zum Strömungskanal 15 hinter einer Kante 115, die die spitz zusammenlaufenden Wände 111, 121 bilden. Dort liegt gewissermaßen ein Übergang zum Strömungskanal 15 vor.

Die Krümmung des Zusatz-Strömungskanals 4 verläuft somit derart, dass die axiale Komponente der Erstreckungsrichtung zum Ende 150 des Zusatz-Strömungskanals 4 hin größer wird und die radiale Komponente kleiner, wobei die radiale Komponente am Ende 150 des Zusatz-Strömungskanals 4 bei null oder geringen Werten liegen kann.

Aufgrund dieser Krümmung und dem Verlauf des Zusatz-Strömungskanals 4 dahingehend, dass er sich in im Wesentlichen axialer Ausrichtung zum Strömungskanal 15 hin öffnet, strömt die Strömung 5 zumindest näherungsweise in axialer Richtung in den Strömungskanal 15 ein und strömt damit in einem äußeren Randbereich, der an die Innenwand 113 des Düsenaustrittsrings 14 angrenzt. Dadurch wird erreicht, dass die durch den Strömungskanal 5 einströmende Strömung keine größeren Turbulenzen erzeugt. Da sie eine an die Innenwand 113 angrenzende Randströmung bildet, verhindert sie, dass die Strömung des Strömungskanals 15, die den Düsenhals A81, A82 passiert hat, bis an die Innenwand 113 strömen kann. Hierdurch wird die geometrische Düsenaustrittsfläche A9, die durch die Austrittskante 13 definiert ist, auf eine gegenüber der geometrischen Düsenaustrittsfläche A9 geringere effektive Düsenaustrittsfläche A9_{eff} reduziert.

Über die Strömung 5 bzw. den Zusatz-Strömungskanal 4 kann somit die effektive Düsenaustrittsfläche A9_{eff} variiert und eingestellt werden.

Die zur Verstellung des Rings 14 verwendeten Aktuatoren können beispielsweise teleskopartig wirkende hydraulische, pneumatische oder elektrische Aktuatoren sein, die an der Außenseite der Schubdüse an der Außenwand 12 und der Außenwand 120 befestigt sind.

Die Figur 8 zeigt den Verkleidungsring 2 und den Düsenaustrittsring 14 in axialen Positionen, die beim Startschub MTO eingestellt werden können. Die Düsenhalsfläche ist durch Bereitstellung des zusätzlichen Querschnitts A82 maximal. Gleichzeitig wird durch den Zusatz-Strömungskanal 4 eine Strömung 5 bereitgestellt, die zu einer Reduzierung der effektiven Düsenaustrittsfläche von der geometrischen Düsenaustrittsfläche A9 auf A9_{eff} führt.

Die Figur 9 zeigt die Schubdüse in einem Betriebsmodus, der im subsonischen Reiseflug vorliegt. Der Verkleidungsring 2 ist axial stromabwärts verschoben, so dass die Querschnittsfläche A82 gegenüber der Position der Figur 8 reduziert ist. Gleichzeitig ist der Düsenaustrittsring 14 maximal stromabwärts verschoben, so dass die Strömung 5 durch den Zusatz-Strömungskanal 4 maximal und dementsprechend die effektive Reduzierung der Düsenaustrittsfläche A9 ebenfalls maximal, A9_{eff} somit minimal ist.

Die Figur 10 zeigt den transsonischen Fall. Der Verkleidungsring 2 ist maximal stromabwärts verschoben, so das der Bypass-Kanal 3 geschlossen ist. Der Düsenaustrittsring 14 befindet sich in einer axialen Position, in der der Zusatz-Strömungskanal 4 etwas geöffnet ist. Die damit einhergehende Strömung 5 verhindert, dass die Strömung im Strömungskanal 15 hinter der Düsenhalsfläche A81 sich bis zur Düsenaustrittskante 13 ausdehnt. Es liegt eine etwa reduzierte effektive Düsenaustrittsfläche A9_{eff} vor.

Es kann dabei vorgesehen sein, dass der Verkleidungsring 2 in der stromabwärtigen Position den Bypass-Kanal 3 nicht vollständig verschließt, sondern ein kleiner Spalt 61 verbleibt, über den in geringem Maße Gas des Strömungskanals 15 in den Bypass-Kanal 3 geleitet wird. Dies kann dazu dienen, eine Verwirbelung hinter dem Verkleidungsring 2 zu vermeiden oder zu reduzieren. Diese Ausführungsvariante kann auch beim Ausführungsbeispiel der Figuren 1 bis 7 vorgesehen sein.

Die Figur 11 zeigt das Triebwerk in einem Betriebsmodus, der einem supersonischen Reiseflug entspricht. Die Stellung des Verkleidungsrings 2 entspricht der der Figur 9. Allerdings ist nun der Düsenaustrittsring 14 maximal stromaufwärts verschoben, so dass der Zusatz-Strömungskanal 4 geschlossen ist. Hinter der Düsenhalsfläche A81, A82 expandiert die Strömung im Strömungskanal 15 nun bis zur Düsenaustrittskante 13. Die strukturelle Düsenaustrittsfläche A9 ist in diesem Fall identisch mit der effektiven Düsenaustrittsfläche A9_{eff}.

Es kann dabei vorgesehen sein, dass der Düsenaustrittsring 14 in der stromaufwärtigen Position den Zusatz-Strömungskanal 4 nicht vollständig verschließt, sondern ein kleiner Spalt 62 verbleibt, über den in geringem Maße Luft in den Zusatz-Strömungskanal 4 geleitet wird. Dies kann dazu dienen, Verwirbelungen zu vermeiden oder zu reduzieren.

Es wird darauf hingewiesen, dass die beschriebene Variation der effektiven Düsenaustrittsfläche durch Bereitstellung einer zusätzlichen Strömung mittels eines axial verschiebbaren Düsenaustrittsring 14 und einem durch diesen wahlweise freigegebenen Zusatz-Strömungskanal 4 mit einer Strömung 5 grundsätzlich unabhängig davon realisiert sein kann, ob die Schubdüse einen axial verschiebbaren Verkleidungsring 2 aufweist oder nicht. Eine derartige Einstellung und Regulierung der effektiven Düsenaustrittsfläche A9_{eff} kann vielmehr auch bei anderen Schubdüsen realisiert werden, beispielsweise auch bei Schubdüsen in Iris/Petal-Ausführung gemäß dem Stand der Technik.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise sind die konkrete Formgebung und die axiale Länge des Verkleidungsrings und der Innenwand nur beispielhaft zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Konvergent-divergente Schubdüse (1) für ein Turbofan-Triebwerk eines Überschallflugzeugs, wobei
- die Schubdüse (1) eine Innenwand (11) aufweist und einen Strömungskanal (15) mit einer Düsenhalsfläche (A81, A82) und einer Düsenaustrittsfläche (A9) ausbildet,
- die Innenwand (11) den Strömungskanal (15) durch die Schubdüse (1) radial außen begrenzt,
- die Schubdüse (1) einen Verkleidungsring (2) aufweist, der zwischen einer ersten Position und einer zweiten Position in axialer Richtung verschiebbar ist,
wobei die Innenwand (11) der Schubdüse (1) und der Verkleidungsring (2) derart ausgebildet und zueinander positioniert sind, dass
- der Verkleidungsring (2) in der ersten Position radial beabstandet und dabei radial innen zur Innenwand (11) verläuft, wobei ein ringförmiger Bypass-Kanal (3) bereitgestellt ist, der zwischen dem Verkleidungsring (2) und der Innenwand (11) der Schubdüse (1) verläuft, wobei der Bypass-Kanal (3) eine zusätzliche Querschnittsfläche des Strömungskanals (15) bereitstellt, und
- wobei in der ersten Position die Düsenhalsfläche durch die Summe der kleinsten Querschnittsfläche (A81) des Verkleidungsrings (2) und der kleinsten Querschnittsfläche (A82) des Bypass-Kanals (3) gebildet ist, und
- in der zweiten Position die Düsenhalsfläche durch die engste Querschnittsfläche (A81) des Verkleidungsrings (2) gebildet ist,
**dadurch gekennzeichnet**
**dass** der Verkleidungsring (2) in der zweiten Position an der Innenwand (11) anliegt, wobei der Bypass-Kanal (3) in der zweiten Position geschlossen ist.

2. Schubdüse nach Anspruch 1, **dadurch gekennzeichnet, dass** die erste Position eine stromaufwärtige Position und die zweite Position eine stromabwärtige Position ist, wobei der Bypass-Kanal (3) in der stromaufwärtigen Position zwischen dem Verkleidungsring (2) und der Innenwand (11) der Schubdüse (1) ausbildet ist und in der stromabwärtigen Position der Verkleidungsring (2) an der Innenwand (11) anliegt.

3. Schubdüse nach einem der vorangehenden Ansprüche, **dadurch gekennzeichnet, dass** die Innenwand (11) der Schubdüse (1) und der Verkleidungsring (2) derart ausgebildet und zueinander positioniert sind, dass bei Verschieben des Verkleidungsrings (2) von der ersten Position in die zweite Position die minimale Querschnittsfläche (A82) des Bypass-Kanals (3) und damit die Düsenhalsfläche (A81, A82) des Strömungskanals (15) sukzessive reduziert wird.

4. Schubdüse nach einem der vorangehenden Ansprüche, **dadurch gekennzeichnet, dass** der Verkleidungsring (2) einen stromaufwärtigen Bereich (21) aufweist, der in Strömungsrichtung konvergiert, wobei sich an den stromaufwärtigen Bereich (21) stromabwärts ein zylindrischer Bereich (22) und/oder ein in Strömungsrichtung divergierender Bereich (23) anschließen.

5. Schubdüse nach Anspruch 4, **dadurch gekennzeichnet, dass** der Verkleidungsring (2) angrenzend an den stromaufwärtigen Bereich (21) einen zylindrischen Bereich (22) und angrenzend an den zylindrischen Bereich (22) einen stromabwärtigen Bereich (23) ausbildet, der in Strömungsrichtung divergiert.

6. Schubdüse nach einem der vorangehenden Ansprüche, **dadurch gekennzeichnet, dass** die Innenwand (11) der Schubdüse (1) einen konvergenten Bereich (110) ausbildet, in dem die Querschnittsfläche der Innenwand (11) in Strömungsrichtung konvergiert.

7. Schubdüse nach Anspruch 6, soweit rückbezogen auf Anspruch 4, **dadurch gekennzeichnet, dass** der stromaufwärtige Bereich (21) des Verkleidungsrings (2) und der konvergente Bereich (110) der Innenwand (11) sich zumindest teilweise über den gleichen axialen Bereich der Schubdüse (1) erstrecken, wenn der Verkleidungsring (2) sich in der ersten Position befindet.

8. Schubdüse nach Anspruch 7, **dadurch gekennzeichnet, dass** der stromaufwärtige Bereich (21) des Verkleidungsrings (2) und der konvergente Bereich (110) der Innenwand (11) im Wesentlichen parallel zueinander verlaufen, wenn der Verkleidungsring (2) sich in der ersten Position befindet.

9. Schubdüse nach einem der vorangehenden Ansprüche, soweit rückbezogen auf Anspruch 4, **dadurch gekennzeichnet, dass** die stromaufwärtige Kante (24) des stromaufwärtigen Bereichs (21) des Verkleidungsrings (2) in der zweiten Position an der Innenwand (11) der Schubdüse (1) anliegt.

10. Schubdüse nach Anspruch 9, soweit rückbezogen auf Anspruch 6, **dadurch gekennzeichnet, dass** die stromaufwärtige Kante (24) im konvergenten Bereich (110) der Innenwand (11) oder an einem Übergang des konvergenten Bereichs (110) zu einem sich daran stromabwärts anschließenden zylindrischen oder divergenten Bereich an der Innenwand (11) der Schubdüse (1) anliegt.

11. Schubdüse nach einem der vorangehenden Ansprüche, **dadurch gekennzeichnet, dass** der Verkleidungsring (2) in der zweiten Position entlang einer Umfangslinie (24) an der Innenwand (11) anliegt.

12. Schubdüse nach einem der vorangehenden Ansprüche, **dadurch gekennzeichnet, dass** die Schubdüse (1) an ihrem stromabwärtigen Ende einen zwischen einer ersten, stromaufwärtigen Position und einer zweiten, stromabwärtigen Position in axialer Richtung verschiebbaren Düsenaustrittsring (14) ausbildet, wobei
- die Schubdüse (1) in der zweiten Position des Düsenaustrittsrings (4) einen ringförmigen Zusatz-Strömungskanal (4) ausbildet, der sich von der Außenhaut der Schubdüse (1) zum Strömungskanal (15) erstreckt und über den Umgebungsluft in den Strömungskanal (15) strömen kann,
- der ringförmige Zusatz-Strömungskanal (4) in der ersten Position des Düsenaustrittsrings (4) geschlossen ist, und
- der Zusatz-Strömungskanal (4) derart ausgebildet und geformt ist, dass die aus dem Zusatz-Strömungskanal (4) austretende Luft eine radial äußere Randströmung im Strömungskanal (15) bildet.

13. Verfahren zur Einstellung der Düsenhalsfläche (A81, A82) in einer konvergent-divergenten Schubdüse (1) eines Turbofan-Triebwerks eines Überschallflugzeugs, wobei die Schubdüse (1) eine Innenwand (11) aufweist, die einen Strömungskanal (15) durch die Schubdüse (1) radial außen begrenzt, aufweisend:
- Bereitstellen eines zwischen einer ersten Position und einer zweiten Position in axialer Richtung verschiebbaren Verkleidungsrings (2), der in der ersten Position unter Ausbildung eines Bypass-Kanals (3) radial beabstandet und dabei radial innen zur Innenwand (11) verläuft und der in der zweiten Position an der Innenwand (11) anliegt, wobei der Bypass-Kanal (3) in der zweiten Position geschlossen ist, und
- Verschieben des Verkleidungsrings (2) zwischen der ersten Position und der zweiten Position zur Einstellung der gewünschten kleinsten Querschnittsfläche des Bypass-Kanals (3), wobei
- in der ersten Position die Düsenhalsfläche durch die Summe der kleinsten Querschnittsfläche (A81) des Verkleidungsrings (2) und der kleinsten Querschnittsfläche (A82) des Bypass-Kanals (3) gebildet ist, und
- in der zweiten Position die Düsenhalsfläche durch die engste Querschnittsfläche (A81) des Verkleidungsrings (2) gebildet ist.

## Claims

1. Convergent-divergent thrust nozzle (1) for a turbofan engine of a supersonic aircraft, wherein
- the thrust nozzle (1) has an inner wall (11) and forms a flow channel (15) with a nozzle throat area (A81, A82) and a nozzle exit area (A9),
- the inner wall (11) delimits the flow channel (15) through the thrust nozzle (1) radially at the outside,
- the thrust nozzle (1) has a lining ring (2) which is displaceable in an axial direction between a first position and a second position, wherein the inner wall (11) of the thrust nozzle (1) and the lining ring (2) are designed and positioned relative to one another such that
- the lining ring (2), in the first position, runs radially spaced apart from and at the same time radially to the inside of the inner wall (11), wherein a ring-shaped bypass channel (3) is provided which runs between the lining ring (2) and the inner wall (11) of the thrust nozzle (1), wherein the bypass channel (3) provides an additional cross-sectional area of the flow channel (15), and
- wherein, in the first position, the nozzle throat area is formed by the sum of the smallest cross-sectional area (A81) of the lining ring (2) and of the smallest cross-sectional area (A82) of the bypass channel (3), and
- in the second position, the nozzle throat area is formed by the narrowest cross-sectional area (A81) of the lining ring (2),
**characterized**
**in that** the lining ring (2), in the second position, bears against the inner wall (11), wherein the bypass channel (3), in the second position, is closed.

2. Thrust nozzle according to Claim 1, **characterized in that** the first position is an upstream position and the second position is a downstream position, wherein the bypass channel (3), in the upstream position, is formed between the lining ring (2) and the inner wall (11) of the thrust nozzle (1), and, in the downstream position, the lining ring (2) bears against the inner wall (11).

3. Thrust nozzle according to any of the preceding claims, **characterized in that** the inner wall (11) of the thrust nozzle (1) and the lining ring (2) are designed and positioned relative to one another such that, as the lining ring (2) is displaced from the first position into the second position, the minimum cross-sectional area (A82) of the bypass channel (3) and thus the nozzle throat area (A81, A82) of the flow channel (15) is successively reduced.

4. Thrust nozzle according to any of the preceding claims, **characterized in that** the lining ring (2) is an upstream region (21) which converges in the flow direction, wherein the upstream region (21) is adjoined, downstream, by a cylindrical region (22) and/or by a region (23) which diverges in the flow direction.

5. Thrust nozzle according to Claim 4, **characterized in that** the lining ring (2) forms, adjacent to the upstream region (21), a cylindrical region (22) and, adjacent to the cylindrical region (22), a downstream region (23) which diverges in the flow direction.

6. Thrust nozzle according to any of the preceding claims, **characterized in that** the inner wall (11) of the thrust nozzle (1) forms a convergent region (110) in which the cross-sectional area of the inner wall (11) converges in the flow direction.

7. Thrust nozzle according to Claim 6, if referred back to Claim 4, **characterized in that** the upstream region (21) of the lining ring (2) and the convergent region (110) of the inner wall (11) extend at least partially over the same axial region of the thrust nozzle (1) when the lining ring (2) is situated in the first position.

8. Thrust nozzle according to Claim 7, **characterized in that** the upstream region (21) of the lining ring (2) and the convergent region (110) of the inner wall (11) run substantially parallel to one another when the lining ring (2) is situated in the first position.

9. Thrust nozzle according to any of the preceding claims, if referred back to Claim 4, **characterized in that** the upstream edge (24) of the upstream region (21) of the lining ring (2) bears, in the second position, against the inner wall (11) of the thrust nozzle (1).

10. Thrust nozzle according to Claim 9, if referred back to Claim 6, **characterized in that** the upstream edge (24) bears against the inner wall (11) of the thrust nozzle (1) in the convergent region (110) of the inner wall (11) or at a transition of the convergent region (110) to a cylindrical or divergent region which adjoins said convergent region in the downstream direction.

11. Thrust nozzle according to any of the preceding claims, **characterized in that** the lining ring (2), in the second position, bears against the inner wall (11) along a circumferential line (24).

12. Thrust nozzle according to any of the preceding claims, **characterized in that** the thrust nozzle (1) forms, at its downstream end, a nozzle outlet ring (14) which is displaceable in an axial direction between a first, upstream position and a second, downstream position, wherein
- the thrust nozzle (1), in the second position of the nozzle outlet ring (4), forms a ring-shaped additional flow channel (4) which extends from the outer skin of the thrust nozzle (1) to the flow channel (15) and via which ambient air can flow into the flow channel (15),
- the ring-shaped additional flow channel (4) is closed in the first position of the nozzle outlet ring (4), and
- the additional flow channel (4) is designed and shaped such that the air emerging from the additional flow channel (4) forms a radially outer boundary flow in the flow channel (15).

13. Method for setting the nozzle throat area (A81, A82) in a convergent-divergent thrust nozzle (1) of a turbofan engine of a supersonic aircraft, wherein the thrust nozzle (1) has an inner wall (11) which delimits a flow channel (15) through the thrust nozzle (1) radially at the outside, comprising:
- providing a lining ring (2) which is displaceable in an axial direction between a first position and a second position and which, in the first position, runs radially spaced apart from and at the same time radially to the inside of the inner wall (11), forming a bypass channel (3), and which, in the second position, bears against the inner wall (11), wherein the bypass channel (3), in the second position, is closed, and
- displacing the lining ring (2) between the first position and the second position in order to set the desired smallest cross-sectional area of the bypass channel (3), wherein
- in the first position, the nozzle throat area is formed by the sum of the smallest cross-sectional area (A81) of the lining ring (2) and of the smallest cross-sectional area (A82) of the bypass channel (3), and
- in the second position, the nozzle throat area is formed by the narrowest cross-sectional area (A81) of the lining ring (2).

## Revendications

1. Tuyère d'éjection convergente-divergente (1) pour un turboréacteur à double flux d'un avion supersonique,
- la tuyère d'éjection (1) présentant une paroi intérieure (11) et constituant un canal d'écoulement (15) avec une surface de col de tuyère (A81, A82) et une surface de sortie de tuyère (A9),
- la paroi intérieure (11) délimitant radialement à l'extérieur le canal d'écoulement (15) à travers la tuyère d'éjection (1),
- la tuyère d'éjection (1) présentant un anneau de garniture (2) qui peut être déplacé dans la direction axiale entre une première position et une deuxième position,
la paroi intérieure (11) de la tuyère d'éjection (1) et l'anneau de garniture (2) étant réalisés et positionnés l'un par rapport à l'autre de telle sorte que
- l'anneau de garniture (2), dans la première position, soit espacé radialement et s'étende ainsi radialement à l'intérieur par rapport à la paroi intérieure (11), un canal de dérivation de forme annulaire (3) étant formé, lequel s'étend entre l'anneau de garniture (2) et la paroi intérieure (11) de la tuyère d'éjection (1), le canal de dérivation (3) constituant une surface supplémentaire en section transversale du canal d'écoulement (15), et
- dans la première position, la surface de col de tuyère étant formée par la somme de la plus petite surface en section transversale (A81) de l'anneau de garniture (2) et de la plus petite surface en section transversale (A82) du canal de dérivation (3), et
- dans la deuxième position, la surface de col de tuyère étant formée par la surface en section transversale la plus étroite (A81) de l'anneau de garniture (2),
**caractérisée en ce que**
l'anneau de garniture (2), dans la deuxième position, s'applique contre la paroi intérieure (11), le canal de dérivation (3) étant fermé dans la deuxième position.

2. Tuyère d'éjection selon la revendication 1, **caractérisée en ce que** la première position est une position amont et la deuxième position est une position aval, le canal de dérivation (3), dans la position amont, étant réalisé entre l'anneau de garniture (2) et la paroi intérieure (11) de la tuyère d'éjection (1), et dans la position aval, l'anneau de garniture (2) s'appliquant contre la paroi intérieure (11).

3. Tuyère d'éjection selon l'une quelconque des revendications précédentes, **caractérisée en ce que** la paroi intérieure (11) de la tuyère d'éjection (1) et l'anneau de garniture (2) sont réalisés et positionnés l'un par rapport à l'autre de telle sorte que lors du déplacement de l'anneau de garniture (2) de la première position à la deuxième position, la surface en section transversale minimale (A82) du canal de dérivation (3) et par conséquent la surface de col de tuyère (A81, A82) du canal d'écoulement (15) soient réduites successivement.

4. Tuyère d'éjection selon l'une quelconque des revendications précédentes, **caractérisée en ce que** l'anneau de garniture (2) présente une région amont (21) qui converge dans la direction d'écoulement, une région cylindrique (22) et/ou une région (23) divergeant dans la direction d'écoulement se raccordant en aval à la région amont (21).

5. Tuyère d'éjection selon la revendication 4, **caractérisée en ce que** l'anneau de garniture (2) constitue, en position adjacente à la région amont (21), une région cylindrique (22), et en position adjacente à la région cylindrique (22), une région aval (23) qui diverge dans la direction d'écoulement.

6. Tuyère d'éjection selon l'une quelconque des revendications précédentes, **caractérisée en ce que** la paroi intérieure (11) de la tuyère d'éjection (1) constitue une région convergente (110) dans laquelle converge la surface en section transversale de la paroi intérieure (11) dans la direction d'écoulement.

7. Tuyère d'éjection selon la revendication 6, dans la mesure où elle se rapporte à la revendication 4, **caractérisée en ce que** la région amont (21) de l'anneau de garniture (2) et la région convergente (110) de la paroi intérieure (11) s'étendent au moins en partie sur la même région axiale de la tuyère d'éjection (1) lorsque l'anneau de garniture (2) se trouve dans la première position.

8. Tuyère d'éjection selon la revendication 7, **caractérisée en ce que** la région amont (21) de l'anneau de garniture (2) et la région convergente (110) de la paroi intérieure (11) s'étendent essentiellement parallèlement l'une à l'autre lorsque l'anneau de garniture (2) se trouve dans la première position.

9. Tuyère d'éjection selon l'une quelconque des revendications précédentes dans la mesure où elles se rapportent à la revendication 4, **caractérisée en ce que** l'arête amont (24) de la région amont (21) de l'anneau de garniture (2) s'applique contre la paroi intérieure (11) de la tuyère d'éjection (1) dans la deuxième position.

10. Tuyère d'éjection selon la revendication 9 dans la mesure où elle se rapporte à la revendication 6, **caractérisée en ce que** l'arête amont (24), dans la région convergente (110) de la paroi intérieure (11) ou au niveau d'une transition de la région convergente (110) à une région cylindrique ou divergente s'y raccordant en aval s'applique contre la paroi intérieure (11) de la tuyère d'éjection (1) .

11. Tuyère d'éjection selon l'une quelconque des revendications précédentes, **caractérisée en ce que** l'anneau de garniture (2), dans la deuxième position, s'applique le long d'une ligne périphérique (24) contre la paroi intérieure (11).

12. Tuyère d'éjection selon l'une quelconque des revendications précédentes, **caractérisée en ce que** la tuyère d'éjection (1), au niveau de son extrémité aval, constitue un anneau de sortie de tuyère (14) pouvant être déplacé dans la direction axiale entre une première position amont et une deuxième position aval,
- la tuyère d'éjection (1), dans la deuxième position de l'anneau de sortie de tuyère (4), constituant un canal d'écoulement annulaire supplémentaire (4) qui s'étend depuis la peau extérieure de la tuyère d'éjection (1) jusqu'au canal d'écoulement (15) et par le biais duquel de l'air environnant peut s'écouler dans le canal d'écoulement (15),
- le canal d'écoulement annulaire supplémentaire (4) étant fermé dans la première position de l'anneau de sortie de tuyère (4), et
- le canal d'écoulement supplémentaire (4) étant réalisé et formé de telle sorte que de l'air sortant du canal d'écoulement supplémentaire (4) forme un écoulement marginal radialement extérieur dans le canal d'écoulement (15).

13. Procédé d'ajustement de la surface de col de tuyère (A81, A82) dans une tuyère d'éjection (1) convergente-divergente pour un turboréacteur à double flux d'un avion supersonique, la tuyère d'éjection (1) présentant une paroi intérieure (11) qui délimite radialement à l'extérieur un canal d'écoulement (15) à travers la tuyère d'éjection (1), le procédé présentant les étapes suivantes :
- fourniture d'un anneau de garniture (2) pouvant être déplacé dans la direction axiale entre une première position et une deuxième position, lequel est espacé radialement dans la première position en formant un canal de dérivation (3) et s'étend ainsi radialement à l'intérieur par rapport à la paroi intérieure (11), et s'applique dans la deuxième position contre la paroi intérieure (11), le canal de dérivation (3) étant fermé dans la deuxième position, et
- déplacement de l'anneau de garniture (2) entre la première position et la deuxième position pour ajuster la plus petite surface en section transversale souhaitée du canal de dérivation (3),
- dans la première position, la surface de col de tuyère étant formée par la somme de la plus petite surface en section transversale (A81) de l'anneau de garniture (2) et de la plus petite surface en section transversale (A82) du canal de dérivation (3), et
- dans la deuxième position, la surface de col de tuyère étant formée par la surface en section transversale la plus étroite (A81) de l'anneau de garniture (2).
